# FASCICULE DE BREVET EUROPEEN

(11) **EP 1 209 370 B1**
(45) Date de publication et mention de la délivrance du brevet: **24.01.2007**
(21) Numéro de dépôt: 01402983.9
(22) Date de dépôt: 21.11.2001
(51) Int. Cl.: F16B 19/10, B60R 21/20, F16B 21/07

(54) **Dispositif de fixation d'une pièce sur un support et système de fixation positive contrôlée d'une ébénisterie de véhicule automobile utilisant un tel dispositif de fixation**
Vorrichtung zum Befestigen eines Bauteils an einen Träger und diese Vorrichtung verwendendes System zum kontrollierten, formschlüssigen Befestigen eines hölzernen Kraftfahrzeugbauteils
Fixation device of a part to a support and positive controlled fixation of a wooden part of a motor vehicle using such fixation device

(30) Priorité: 27.11.2000 FR 0015274
(43) Date de publication de la demande: 29.05.2002
(73) Titulaire: MÖLLERTECH SAS, 91370 Verrières le Buisson (FR); ADAM OPEL AG, 65423 Ruesselsheim (DE)
(72) Inventeur: Rolland, Hervé, 36000 Chateauroux (FR); Annawald, Frank, 67705 Stelzenberg (DE); Felzer, Stefan, 55442 Stromberg (DE)
(74) Mandataire: Thinat, Michel

(56) Documents cités:
- EP-A- 0 873 916
- EP-A- 0 976 645
- FR-A- 2 761 422
- US-A- 4 571 134
- US-A- 5 662 375

## Description

La présente invention concerne un dispositif de fixation d'une pièce sur un support. Elle concerne également un système de fixation positive contrôlée d'une ébénisterie sur une carrosserie d'un véhicule automobile utilisant un tel dispositif de fixation.

Plus particulièrement, l'invention concerne un dispositif de fixation d'une pièce sur un support, du type comprenant une agrafe destinée à s'encliqueter dans un orifice ménagé dans le support et comprenant deux branches élastiquement déformables pourvues chacune d'une extrémité proximale s'étendant à partir d'une tête et d'une extrémité distale pourvue d'une face externe délimitant une rampe d'encliquetage prolongée en direction de l'extrémité proximale par un logement dans lequel le bord de l'orifice du support est destiné à s'engager, en position d'assemblage de la pièce et du support.

Ce type d'agrafe, bien qu'étant d'une utilisation aisée, présente un inconvénient majeur, relatif au fait que, en raison de la structure élastiquement déformable des branches, après assemblage, lorsqu'elle est soumise à un effort axial relativement important, l'agrafe est susceptible de se décrocher du support dans laquelle elle est encliquetée.

L'augmentation de l'effort d'arrachement de ce type de dispositif s'effectue en augmentant la rigidité des branches de l'agrafe, ce qui s'accompagne d'une augmentation consécutive de l'effort nécessaire pour le montage de la pièce sur le support.

Lorsqu'il est utilisé pour le montage d'un montant de baie sur une carrosserie de véhicule automobile, derrière lequel vient souvent se loger un coussin gonflable de sécurité, ce type de dispositif maintient positivement la pièce fixée sur la carrosserie alors que les autres points de fixation permettent en se désencliquetant le basculement du montant de baie et ainsi le déploiement du coussin gonflable et le passage de sangles qui le retiennent à la carrosserie.

Cependant, afin d'éviter tout risque d'incident lors du déploiement du coussin gonflable, il est nécessaire que le montant de baie soit par ailleurs fixé de manière inamovible sur la carrosserie.

Par ailleurs, dans un dispositif de fixation amovible, tel que décrit dans le document EP 0 976 645, la fixation est rendue réversible au moyen d'une pince à deux parois d'accueil flexibles permettant d'assurer un déverrouillage facile d'une agrafe du dispositif.

Le document US 5 775 860 est considéré comme étant l'état de la technique le plus proche et décrit un dispositif de fixation conforme le préambule de la revendication 1.

Au vu de ce qui précède, le but de l'invention est de fournir un dispositif de fixation d'une pièce sur un support aisé à utiliser et généralement inamovible.

Elle a donc pour objet un dispositif de fixation du type précité, essentiellement caractérisé en qu'il comporte en outre une queue de verrouillage axialement déplaçable entre les branches de l'agrafe et destinée à être insérée entre ces dernières pour venir s'appuyer contre au moins l'une desdites branches.

On interdit ainsi tout mouvement de rapprochement mutuel des branches de l'agrafe susceptible d'engendrer un décrochement de cette dernière, tout en conservant une utilisation aisée du dispositif dans la mesure où la fixation de la pièce sur le support s'effectue par encliquetage.

Ce dispositif de fixation peut également comporter une ou plusieurs des caractéristiques suivantes, prises isolément ou selon toutes les combinaisons techniquement possibles :
- la queue de verrouillage est munie d'un bourrelet latéral en saillie destiné à s'engager dans une gorge de verrouillage complémentaire ménagée dans la paroi interne de l'une des branches ;
- la paroi interne de l'autre branche de l'agrafe est dotée d'un épaulement en saillie contre lequel la queue vient prendre appui ;
- il comporte en outre une pince de blocage destinée à être montée sur l'agrafe, la pince comprenant deux lames élastiquement déformables lors de l'encliquetage de l'agrafe, d'une première position, dans laquelle elles sont écartées l'une de l'autre et dans laquelle leur extrémité libre constitue une butée de limitation du déplacement axial de la queue de verrouillage vers une deuxième position, dans laquelle elles sont rapprochées l'une de l'autre et autorisent un déplacement axial de la queue ;
- la pince de blocage comporte deux bras élastiquement déformables de forme complémentaire de celle des branches de l'agrafe, lesdits bras s'étendant respectivement, en position assemblée du dispositif, le long des branches de l'agrafe et en appui contre ces dernières pour former extérieurement ladite rampe et ledit logement ;
- chaque bras est doté d'une zone d'extrémité libre recourbée s'engageant dans un logement de forme complémentaire ménagé dans l'agrafe ;
- la queue de verrouillage est déplaçable axialement entre les branches de l'agrafe d'une position d'attente dans laquelle le bourrelet de la queue s'engage dans une gorge additionnelle ménagée dans la branche de l'agrafe dans laquelle est pratiquée la gorge de verrouillage, jusqu'à une position active de verrouillage dans laquelle le bourrelet s'engage dans la gorge de verrouillage ;
- l'agrafe est pourvue d'une ouverture à contour à asymétrie axiale dans laquelle la queue est destinée à s'engager, la queue étant pourvue d'une zone d'extrémité proximale équipée d'une jupe de forme complémentaire de celle de l'ouverture
- la tête de l'agrafe est venue de matière avec la pièce ;
- la pièce est pourvue d'une empreinte de réception d'une tête de l'organe de verrouillage.

L'invention a également pour objet un système de fixation d'une ébénisterie de véhicule automobile utilisant un tel dispositif de fixation et un système de fixation d'un montant de baie sur une carrosserie de véhicule automobile, caractérisé en ce qu'il comporte un dispositif de fixation tel que défini ci-dessus pour le montage d'une extrémité du montant de baie et un ensemble d'agrafes de fixation amovible pour le montage du reste du montant de baie.

D'autres buts, caractéristiques et avantages de l'invention ressortiront de la description suivante, donnée uniquement à titre d'exemple non limitatif, et faite en référence aux dessins annexés sur lesquels :
- la figure 1 est une vue en perspective éclatée d'un dispositif de fixation conforme à l'invention ;
- la figure 2 est une vue en coupe longitudinale selon la ligne II-II du dispositif de fixation de la figure 1, dans une position pré-assemblée ;
- la figure 3 est une vue en coupe longitudinale selon la ligne III-III du dispositif de fixation de la figure 1, à l'état assemblé, au cours de l'encliquetage de l'agrafe sur le support ;
- la figure 4 montre le dispositif de fixation de la figure 3 en position de verrouillage ; et
- la figure 5 illustre un exemple d'utilisation de l'agrafe de fixation des figures 1 à 4, pour la fixation d'un montant de baie sur une carrosserie de véhicule automobile.

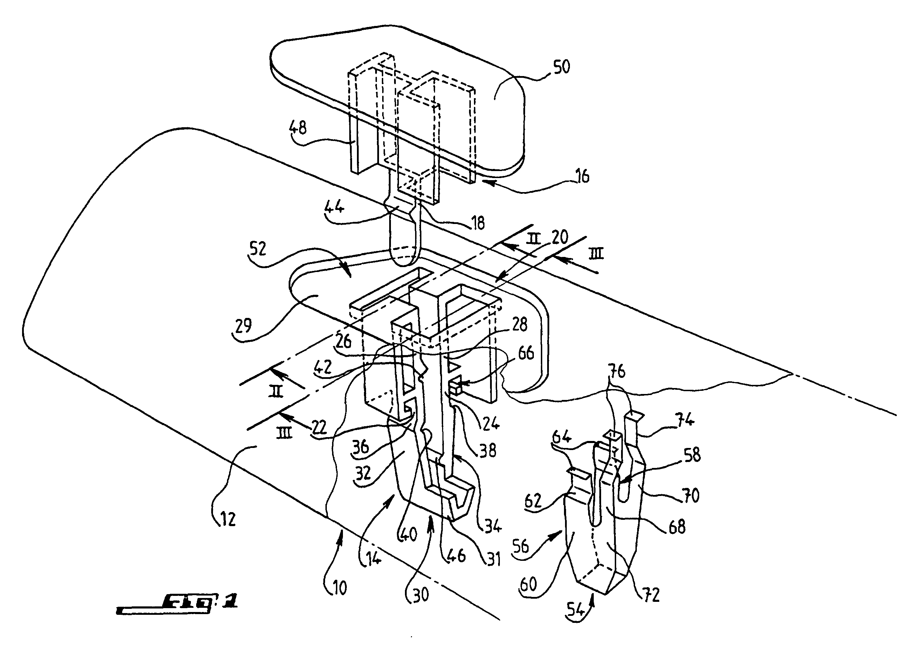

Sur la figure 1, on a représenté une vue en perspective éclatée d'un dispositif de fixation conforme à l'invention, désigné par la référence numérique générale 10.

Ce dispositif est destiné à la fixation d'une pièce 12 sur un support (non représenté).

Il est essentiellement constitué d'une agrafe 14, venue de moulage avec la pièce 12 et destinée à s'encliqueter dans un orifice ménagé dans le support, et d'un organe de verrouillage 16 pourvu d'une queue 18 destinée à s'engager dans un orifice 20 ménagée dans le support 12 pour venir verrouiller l'agrafe 14 en position d'encliquetage.

L'agrafe 14 comporte deux branches 22 et 24 élastiquement déformables pourvues chacune d'une extrémité proximale 26 et 28 s'étendant à partir d'une tête 29 intégrée au support 12 et dotées d'extrémités distales 30 respectives convergentes et réunies pour constituer un bec 31 en forme de profilé en V.

Au voisinage de leur extrémité distale 30, la face externe des branches 22 et 24 est pourvue d'une rampe d'encliquetage 32 et 34 prolongée, en direction de l'extrémité proximale, d'un logement 36, 38 de réception du bord de l'orifice ménagé dans le support.

Par ailleurs, la face interne de l'une des branches, à savoir la branche désignée par la référence numérique générale 22, c'est-à-dire la face tournée vers l'autre branche, est pourvue d'une première gorge 40 située à proximité de la zone de liaison entre la rampe d'encliquetage et le logement, et d'une deuxième gorge 42 située à proximité de l'extrémité proximale 26.

La queue 18 de l'organe de verrouillage comporte, quant à elle, un bourrelet complémentaire 44 ménagé sur l'une de ses faces et conformé de manière à venir se loger dans l'une et l'autre des première et deuxième gorges 40 et 42.

La surface interne de la deuxième branche 24 comporte au voisinage de son extrémité distale 30, un épaulement 46 contre lequel la queue de verrouillage 18 vient prendre appui lorsque le bourrelet 44 est engagé dans la première gorge 40.

L'ouverture 20 ménagée dans la pièce 12 comporte un contour à asymétrie axiale. L'organe de verrouillage 16 est, quant à lui, pourvu zone d'extrémité proximale dotée d'une jupe constituée d'un ensemble de pans dressés, tels que 48, de forme complémentaire de celle de l'ouverture 20 de manière à éviter toute inversion dans le sens d'introduction de l'organe 16 dans l'agrafe 14, entre les deux branches 22 et 24.

On voit par ailleurs sur la figure 1 que l'organe de verrouillage 16 est pourvu d'une tête 50 formant enjoliveur portant la jupe et s'engageant, en position active de verrouillage de la queue, dans une empreinte 52 complémentaire pratiquée dans la pièce 12.

Enfin, l'agrafe de fixation qui vient d'être décrite est complétée par une pince de contrôle de position et de blocage 54 venant se monter sur l'agrafe 14 pour empêcher toute insertion de l'organe de blocage 16 entre les branches de l'agrafe tant que cette dernière n'est pas correctement encliquetée dans le support.

A cet effet, la pince de blocage 54 a forme générale de V et comporte deux bras 56 et 58 déformables élastiquement de forme complémentaire de celle des branches 22 et 24, et sensiblement de même largeur, pour venir se positionner contre de ces dernières.

C'est-à-dire, chacune des branches comporte une première partie 60 de forme générale rectiligne complémentaire de celle des rampes d'encliquetage 32 ménagées extérieurement dans les branches 22 et 24 de l'agrafe.

Les premières parties 60 des deux bras se prolongent par des parties convergentes, telles que 62, de forme complémentaire de celle des logements 36 des bras 22 et 24 pour recevoir le bord périphérique de l'orifice ménagé dans le support, elles-mêmes prolongées par un épaulement d'extrémité 64 venant s'insérer dans un logement 66 ménagé dans l'agrafe pour le montage de la pince 54 sur cette dernière.

Par ailleurs, la pince 54 est pourvu de deux lames élastiquement déformables 68, 70 de longueur supérieure à celle des bras 56 et 58 et s'étendant sensiblement parallèlement à ces derniers.

Chaque lame est pourvue d'une première partie 72 rectiligne s'étendant globalement jusqu'à l'extrémité libre des bras, prolongée par une partie convergente 74 munie d'un épaulement d'extrémité 76. Ainsi, au niveau des parties convergentes 62 des bras et par rapport à ces dernières, les lames sont décalées vers l'extérieur.

On notera que, de préférence, la pince est réalisée en une pièce métallique.

Pour assembler le dispositif de fixation qui vient d'être décrit, il convient simplement d'insérer la pince de blocage 54 autour de l'agrafe 14 de sorte que les épaulements d'extrémité 64 des deux bras s'insèrent dans les logements 66 ménagés dans l'agrafe et que le fond de la pince s'engage autour du bec 31 de l'agrafe, et d'insérer l'organe de verrouillage 16 à travers l'orifice 20 de sorte que le bourrelet 44 s'engage dans la deuxième gorge 42.

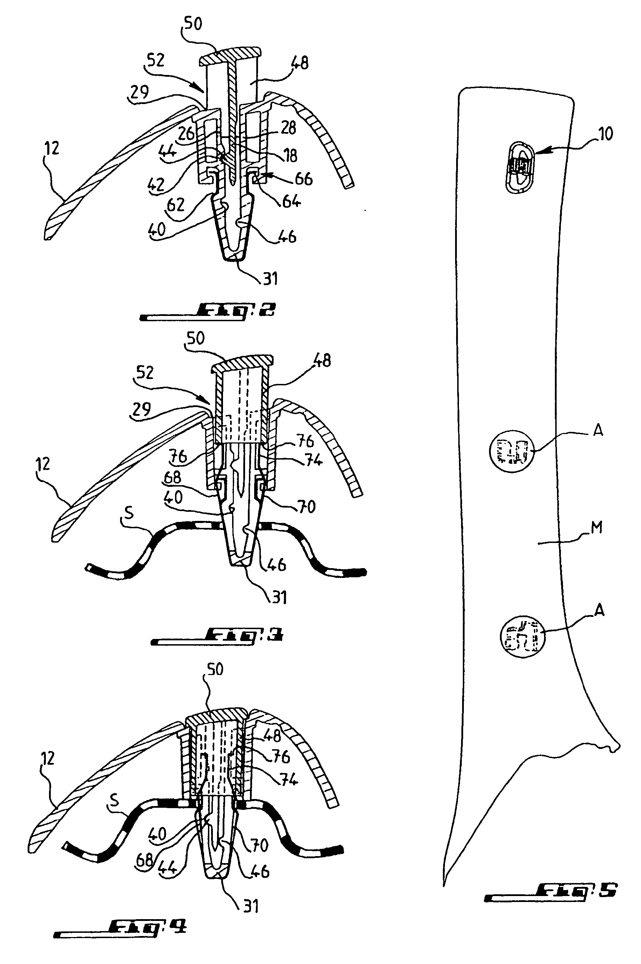

Le dispositif se situe alors dans une position de pré-assemblage visible sur la figure 2.

Dans cette position, les deux branches 22 et 24 de l'agrafe sont libres de se déformer élastiquement.

Par ailleurs, les deux bras 56 et 58 de la pince de blocage sont respectivement appliqués contre les faces externes des branches 22 et 24, les deux lames 68, 70 étant dégagées de ces dernières.

On notera, que dans cette position, les épaulements d'extrémité 76 de ces lames constituent des butées empêchant toute insertion de l'organe de verrouillage 16 entre les branches 22 et 24, au-delà de cette position de pré-assemblage.

En référence à la figure 3, pour procéder à la fixation proprement dite de la pièce 12 sur le support S il convient simplement d'exercer un effort sur la pièce 12 de manière que l'agrafe 14 s'encliquette dans l'orifice ménagé dans le support S, c'est-à-dire jusqu'à ce que le bord périphérique de l'orifice, guidé le long de la rampe d'encliquetage constitué par la partie 60 rectiligne des bras 56 et 58, s'engage dans le logement 62 de ces derniers.

En se référant maintenant à la figure 4, au cours de cette opération d'encliquetage, les lames 68 et 70 subissent un effort tendant à les rapprocher l'une de l'autre.

Après encliquetage de l'agrafe 14, les épaulements d'extrémité 76 des lames 68 et 70 sont positionnés dans une deuxième configuration dans laquelle elles sont dégagées des pans 48 portés par l'organe de verrouillage autorisant dès lors un déplacement de ce dernier au-delà de la position de pré-assemblage mentionnée précédemment.

Ainsi, pour procéder au verrouillage du dispositif de fixation, il convient simplement d'exercer un effort sur la tête 50 de l'organe de verrouillage de manière à le déplacer queue jusqu'à une position de verrouillage dans laquelle le bourrelet 44 qu'elle porte s'engage dans la première gorge 40.

Dans cette position, l'épaulement 46 porté par la deuxième branche 24 sollicite le bourrelet 44 dans la gorge 40 correspondante empêchant ainsi toute déformation ultérieure des branches 22 et 24 de l'agrafe et ainsi tout arrachement de cette dernière.

Comme on le conçoit, le dispositif de fixation qui vient d'être décrit, qui utilise une queue de verrouillage axialement déplaçable entre les branches de l'agrafe d'une position de pré-assemblage ou d'attente jusqu'à une position active de verrouillage dans laquelle elle s'engage dans une gorge portée par l'une des branches de l'agrafe permet l'obtention d'un assemblage sensiblement inamovible.

Par ailleurs, le dispositif de fixation qui vient d'être décrit fourni au poseur l'assurance d'un encliquetage correct de l'agrafe, sur le support dans la mesure où l'organe de verrouillage ne peut être positionné dans sa configuration active que lorsque les lames ont été déformées par le bord périphérique de l'orifice dans lequel l'agrafe vient s'encliqueter.

Ainsi, lorsqu'il est destiné à la fixation d'une pièce d'ébénisterie sur une carrosserie de véhicule automobile, le dispositif de fixation permet, d'une part, de rendre sensiblement inamovible l'encliquetage de la pièce sur la carrosserie, par verrouillage au moyen de la queue de l'organe de verrouillage et, d'autre part, de contrôler l'encliquetage correct de la pièce sur la carrosserie avant- verrouillage final de l'assemblage, dans la mesure, tant que la pince de blocage 54 n'est pas suffisamment refermée, c'est-à-dire jusqu'à ce qu'elle remplisse sa fonction d'encliquetage de la pièce sur la carrosserie, les lames empêchent l'organe de verrouillage de descendre et d'obtenir le verrouillage final.

Un tel avantage est particulièrement appréciable lors d'un montage en aveugle d'une pièce d'ébénisterie sur la carrosserie, dans une chaîne de montage, dans la mesure où le constructeur a l'assurance que les critères de sécurité spécifiés ont été respectés lors de l'assemblage.

En se référant enfin à la figure 5, par exemple, le dispositif de fixation selon l'invention peut être utilisé dans un système de fixation d'un montant de baie M sur une carrosserie de véhicule automobile derrière lequel vient se loger un coussin gonflable de sécurité.

Pour procéder à cet assemblage, on utilise un système de fixation constitué d'un dispositif de fixation 10 identique au dispositif de fixation décrit précédemment, servant à la fixation de l'extrémité supérieure du montant de baie, le reste du montant M étant fixé sur la carrosserie à l'aide d'une ou de plusieurs agrafes A de fixation amovible dont l'effort d'arrachement est sensiblement inférieur à l'effort s'exerçant lors du déploiement du coussin.

Ainsi, lors du déclenchement du coussin gonflable de sécurité, les agrafes de fixation amovibles A sont décrochées, l'extrémité supérieure du montant M restant solidaire de la carrosserie.

Les parties inférieure et médiane du montant sont ainsi libérées de la carrosserie, laissant ainsi passer le coussin gonflable et les sangles qui le retiennent à la carrosserie, tandis que l'extrémité supérieure reste fixée à cette dernière évitant ainsi tout risque d'incident.

## Revendications

1. Dispositif de fixation d'une pièce (12) sur un support (S), comprenant une agrafe (14) destinée à s'encliqueter dans un orifice ménagé dans le support et comprenant deux branches (22, 24) élastiquement déformables pourvues chacune d'une extrémité proximale (26, 28) s'étendant à partir d'une tête (29) et d'une extrémité distale (30) pourvue d'une face externe délimitant une rampe d'encliquetage (32, 34) prolongée en direction de l'extrémité proximale par un logement (36, 38) dans lequel le bord de l'orifice du support est destiné à s'engager, en position d'assemblage de la pièce et du support, comportant en outre une queue (18) de verrouillage axialement déplaçable entre les branches (22, 24) de l'agrafe et destinée à être insérée entre ces dernières pour venir s'appuyer contre au moins l'une desdites branches, **caractérisé en ce qu'**il comporte en outre une pince de blocage (54) destinée à être montée sur l'agrafe (14), la pince comprenant deux lames (68, 70) élastiquement déformables lors de l'encliquetage de l'agrafe, d'une première position, dans laquelle elles sont écartées l'une de l'autre et dans laquelle leur extrémité libre (76) constitue une butée de limitation du déplacement axial de la queue de verrouillage (18), vers une deuxième position, dans laquelle elles sont rapprochées l'une de l'autre et autorisent un déplacement axial de la queue (18).

2. Dispositif de fixation selon la revendication 1, **caractérisé en ce que** la queue de verrouillage est munie d'un bourrelet latéral (44) en saillie destiné à s'engager dans une gorge de verrouillage (40) complémentaire ménagée dans la paroi interne de l'une des branches, la paroi interne de l'autre branche de l'agrafe étant dotée d'un épaulement (46) en saillie contre lequel la queue (18) vient prendre appui.

3. Dispositif de fixation selon la revendication 2, **caractérisé en ce que** la pince de blocage (54) comporte deux bras (56, 58) élastiquement déformables de forme complémentaire de celle des branches (22, 24) de l'agrafe, lesdits bras s'étendant respectivement, en position assemblée du dispositif, le long des branches de l'agrafe et en appui contre ces dernières pour former extérieurement ladite rampe et ledit logement.

4. Dispositif de fixation selon la revendication 3, **caractérisé en ce que** chaque bras (56, 58) est doté d'une zone d'extrémité libre (64) recourbée s'engageant dans un logement (66) de forme complémentaire ménagé dans l'agrafe.

5. Dispositif de fixation selon l'une quelconque des revendications 1 à 4, **caractérisé en ce que** la queue de verrouillage (18) est déplaçable axialement entre les branches de l'agrafe d'une position d'attente dans laquelle le bourrelet (44) de la queue s'engage dans une gorge additionnelle (42) ménagée dans la branche (22) de l'agrafe dans laquelle est pratiquée la gorge de verrouillage (40), jusqu'à une position active de verrouillage dans laquelle le bourrelet (44) s'engage dans la gorge de verrouillage.

6. Dispositif de fixation selon l'une quelconque des revendications 1 à 5, **caractérisé en ce que** l'agrafe est pourvue d'une ouverture (20) à contour à asymétrie axiale dans laquelle la queue est destinée à s'engager, et **en ce que** la queue est pourvue d'une zone d'extrémité proximale équipée d'une jupe (48) de forme complémentaire de celle de l'ouverture.

7. Dispositif de fixation selon l'une quelconque des revendications 1 à 6, **caractérisé en ce que** la tête (29) de l'agrafe est venue de matière avec la pièce (12).

8. Dispositif de fixation selon l'une quelconque des revendications 1 à 7, **caractérisé en ce que** la pièce est pourvue d'une empreinte (52) de réception d'une tête (50) de l'organe de verrouillage.

9. Système de fixation d'une ébénisterie (M) sur une carrosserie de véhicule automobile, **caractérisé en ce qu'**il comporte un dispositif de fixation (10) selon l'une quelconque des revendications 1 à 8.

10. Système de fixation d'un montant de baie (M) sur une carrosserie de véhicule automobile, **caractérisé en ce qu'**il comporte un dispositif de fixation (10) selon l'une quelconque des revendications 1 à 9 pour le montage d'une extrémité du montant de baie (M) et un ensemble d'agrafes (A) de fixation amovible pour le montage du reste du montant de baie.

## Claims

1. A device for fixing a part (12) on a support (S) comprising a fastener (14) intended to be snapped into a orifice provided in the support and comprising two elastically deformable branches (22, 24) each provided with a proximal end (26, 28) extending from a head (29) and a distal end (30) provided with an external face delimiting a detent ramp (32, 34) extended in the direction of the proximal end with a housing (36, 38) into which the edge of the orifice of the support is intended to engage, in the assembly position of the part and of the support, further including an axially displaceable locking tail (18) between the branches (22, 24) of the fastener and intended to be inserted between the latter so as to come and press against at least one of said branches, **characterized in that** it further includes a blocking clamp (54) intended to be mounted on the fastener (14), the clamp comprising two elastically deformable blades (68, 70) when the fastener snaps in, from a first position, in which they are spaced apart from each other and in which their free end (76) forms a stop for limiting the axial displacement of the locking tail (18), towards a second position, in which they are brought closer to each other and allow axial displacement of the tail (18).

2. The fixation device according to claim 1, **characterized in that** the locking tail is provided with a protruding side bulge (44) intended to engage into a complementary locking groove (40) provided in the internal wall of one of the branches, the internal wall of the other branch of the fastener being provided with a protruding shoulder (46) against which the tail (18) will rest.

3. The fixation device according to claim 2, **characterized in that** the blocking clamp (54) includes two elastically deformable arms (56, 58) with a complementary shape to that of the branches (22, 24) of the fastener, said arms respectively extending, in the assembled position of the device, along the branches of the fastener and resting against the latter in order to form outside said ramp and said housing.

4. The fixation device according to claim 3, **characterized in that** each arm (56, 58) is provided with a curved free end area (64) engaging into a housing (66) of a complementary shape provided in the fastener.

5. The fixation device according to any of claims 1 to 4, **characterized in that** the locking tail (18) is axially displaceable between the branches of the fastener from a waiting position in which the bulge (44) of the tail engages into an additional groove (42) provided in the branch (22) of the fastener in which the locking groove (40) is provided, up to an active locking position in which the bulge (44) engages into the locking groove.

6. The fixation device according to any of claims 1 to 5, **characterized in that** the fastener is provided with an aperture (20) with an axially asymmetrical contour, into which the tail is intended to engage, and **in that** the tail is provided with a proximal end area fitted with a skirt (48) of a complementary shape to that of the aperture.

7. The fixation device according to any of claims 1 to 6, **characterized in that** the head (29) of the fastener is made out of the same material as the part (12).

8. The fixation device according to any of claims 1 to 7, **characterized in that** the part is provided with an imprint (52) for receiving a head (50) of the locking member.

9. A system for fixing a wooden part (M) on a body of a motor vehicle, **characterized in that** it includes a fixation device (10) according to any of claims 1 to 8.

10. A system for fixing a window post (M) on a body of a motor vehicle, **characterized in that** it includes a fixation device (10) according to any of claims 1 to 9 for mounting an end of the window post (M) and a set of removable fixation fasteners (A) for mounting the remainder of the window post.

## Patentansprüche

1. Vorrichtung zum Befestigen eines Bauteils (12) an einem Träger (S), eine Klammer (14) umfassend, die dazu bestimmt ist, in eine in den Träger eingearbeitete Öffnung einzurasten, zwei elastisch verformbare Schenkel (22, 24) aufweisend, welche jeweils mit einem proximalen Ende (26, 28) versehen sind, das sich von einem Kopf (29) aus erstreckt, und einem distalen Ende (30), das mit einer Außenseite versehen ist, die eine Einrastrampe (32, 34) begrenzt, die sich in Richtung des proximalen Endes durch eine Aufnahme (36, 38) verlängert, in die der Rand der Öffnung des Trägers in Verbindungsposition von Bauteil und Träger einrastet, weiterhin ein axial zwischen den Schenkeln (22, 24) der Klammer verschiebbares Verriegelungs-Endstück (18) umfassend, das dafür vorgesehen ist, zwischen diesen eingefügt zu werden, um sich mindestens auf einem der besagten Schenkel abzustützen, **dadurch gekennzeichnet, dass** sie weiterhin eine Blockierklemme (54) umfasst, die dazu bestimmt ist, auf der Klammer (14) befestigt zu werden, wobei die Klemme zwei Lamellen (68, 70) umfasst, die sich beim Einrasten der Klammer von einer ersten Stellung, in der sie voneinander entfernt sind und in welcher ihr freies Ende (76) einen Anschlag zur Begrenzung der axialen Verschiebung des Verriegelungs-Endstücks (18) darstellt, in eine zweite Stellung, in welcher sie sich einander annähern und eine axiale Verschiebung des Endstücks (18) gestatten, elastisch verformen.

2. Befestigungsvorrichtung nach Anspruch 1, **dadurch gekennzeichnet, dass** das Verriegelungs-Endstück mit einer seitlich hervorstehenden Wulst (44) ausgestattet ist, die dazu bestimmt ist, in einer ergänzenden Verriegelungs-Nut (40) einzurasten, die in die Innenwand eines Schenkels eingearbeitet ist, wobei die Innenwand des anderen Schenkels der Klammer einen hervorstehenden Ansatz (46) hat, auf dem sich das Endstück (18) abstützt.

3. Befestigungsvorrichtung nach Anspruch 2, **dadurch gekennzeichnet, dass** die Blockierklemme (54) zwei elastisch verformbare Arme (56, 58) umfasst, deren Form zu der Form der Schenkel (22, 24) der Klammer komplementär ist, wobei sich die besagten Arme jeweils in zusammengebauter Stellung der Vorrichtung entlang der Schenkel der Klammer erstrecken und auf diesen abstützen, um außen die besagte Rampe und die besagte Aufnahme zu bilden.

4. Befestigungsvorrichtung nach Anspruch 3, **dadurch gekennzeichnet, dass** jeder Arm (56, 58) mit einem gebogenen freien Endbereich (64) versehen ist, der in eine komplementär geformte Aufnahme (66) eingreift, die in die Klammer eingearbeitet ist.

5. Befestigungsvorrichtung nach einem der Ansprüche 1 bis 4, **dadurch gekennzeichnet, dass** das Verriegelungs-Endstück (18) axial zwischen den Schenkeln der Klammer von einer Wartestellung, in der die Wulst (44) des Endstücks in eine zusätzliche Nut (42) eingreift, die in den Schenkel (22) der Klammer eingearbeitet ist, in den die Verriegelungs-Nut (40) eingearbeitet ist, bis in eine aktive Verriegelungsstellung verschiebbar ist, in der die Wulst (44) in die Verriegelungs-Nut eingreift.

6. Befestigungsvorrichtung nach einem der Ansprüche 1 bis 5, **dadurch gekennzeichnet, dass** die Klammer mit einer Öffnung (20) mit axial asymmetrischer Kontur versehen ist, in die das Endstück eingreift, und dadurch, dass das Endstück mit einem proximalen Endbereich versehen ist, der mit einem Mantel (48) ausgestattet ist, dessen Form zu der Form der Öffnung komplementär ist.

7. Befestigungsvorrichtung nach einem der Ansprüche 1 bis 6, **dadurch gekennzeichnet, dass** der Kopf (29) der Klammer und das Bauteil (12) aus demselben Material hergestellt werden.

8. Befestigungsvorrichtung nach einem der Ansprüche 1 bis 7, **dadurch gekennzeichnet, dass** das Bauteil mit einer Eindrückung (52) zur Aufnahme eines Kopfes (50) des Verriegelungsorgans versehen ist.

9. Hölzernes Befestigungssystem (M) an einer Kraftfahrzeugkarosserie, **dadurch gekennzeichnet, dass** es eine Befestigungsvorrichtung (10) nach einem der Ansprüche 1 bis 8 aufweist.

10. Befestigungssystem einer Fenstersäule (M) an einer Kraftfahrzeugkarosserie, **dadurch gekennzeichnet, dass** es eine Befestigungsvorrichtung (10) nach einem der Ansprüche 1 bis 9 zur Montage eines Endes der Fenstersäule (M) und eine Gruppe von Klammern (A) zur beweglichen Befestigung für die Montage der restlichen Fenstersäule umfasst.
